# NEUE EUROPÄISCHE PATENTSCHRIFT

(11) **EP 0 224 913 B2**
(45) Veröffentlichungstag und Bekanntmachung des Hinweises auf die Entscheidung über den Einspruch: **03.04.1996**
(45) Hinweis auf die Patenterteilung: 13.03.1991
(21) Anmeldenummer: 86116770.8
(22) Anmeldetag: 02.12.1986
(51) Int. Cl.: C08L 51/00

(54) **Flexible bis weiche Formkörper auf der Basis von Vinylchlorid-Acrylsäureester-Pfropfcopolymerisat**
Flexible to soft moulded objects based on graft copolymers of acrylates and vinyl chloride
Objets moulés flexibles à mous à base de copolymères greffés d'acrylates et de chlorure de vinyle

(30) Priorität: 03.12.1985 DE 3542694
(43) Veröffentlichungstag der Anmeldung: 10.06.1987
(73) Patentinhaber: WACKER-CHEMIE GMBH, D-81737 München (DE)
(72) Erfinder: Haller, Ingo, D-8263 Burghausen (DE); Haberl, Georg, A-5230 Mattighofen (AT)

(56) Entgegenhaltungen:
- EP-A- 0 143 321
- DE-A- 172 095
- DE-A- 3 413 836
- DE-A- 3 714 182
- FR-A- 1 431 547
- US-A- 3 019 208
- DIN-Taschenbuch 18, Kunststoffe 1, 1984, DIN-Norm Nr.53455
- W. Laeis "Einführung in die Werkstoffkunde der Kunststoffe", S. 76-77
- H. Domininghaus "Die Kunststoffe und ihre Eigenschaften" 2. Auflage, VDI-Verlag, Düsseldorf, S. 152-153
- Saechtling-Zebrowsli "Kunststoff-Taschenbuch" 19. Ausgabe, Carl Hanser Verlag, München, 1974, S. 272-273

## Beschreibung

Es ist bekannt, Pfropfcopolymerisate aus Vinylchlorid und Acrylsäureester zur Herstellung harter, schlagzäher Formkörper zu verwenden, die zudem alterungs- und witterungsbeständig sind. Die besten Ergebnisse werden dabei erhalten, wenn die Formmassen zur Herstellung der Formkörper etwa 5 bis 6 Gew.-% polymerisierte Acrylsäureester, bezogen auf polymerisiertes Vinylchlorid, enthalten. Es ist dabei prinzipiell gleichgültig, ob das Pfropfcopolymere in reiner Form verwendet wird oder als Modifizierharz, das selbst höhere Gehalte an Acrylsäureestern aufweist, einem üblichen Thermoplasten, z.B. PVC (Polyvinylchlorid), zugesetzt wird.

Aus praktischen Gründen wird von vielen Verarbeitern der letztere Weg bevorzugt, der es ihnen, ausgehend von sogenannten Schlagzähkonzentraten, erlaubt, die Schlagzähigkeit innerhalb eines gewissen Rahmens durch Mischen mit dem Thermoplasten selbst einzustellen. Die Zusatzmengen solcher Additive liegen, bezogen auf den Thermoplasten, z.B. PVC-Homopolymere, bei vorzugsweise 7 bis 15 Gew.-%. Dies entspricht wiederum einem Anteil von ca. 5 bis 6 Gew.-% an polymerisiertem Acrylat als wirksamem Schlagzähmodifier, bezogen auf polymerisiertes Vinylchlorid (VC). Sehr gute Ergebnisse erzielt man dabei mit Schlagzähmodifizierharzen, die durch Aufpfropfen von Vinylchlorid auf Polybutylacrylat hergestellt worden sind. Typische Anwendungen solcher schlagzähmodifizierter Massen sind Fensterprofile und Platten oder Profile für Fassadenverkleidungen.

Es wurde nun überraschenderweise gefunden, daß solchermaßen als Additiv konzipiertes Schlagzähkonzentrat sich in reiner Form oder im Gemisch mit beispielsweise elastischen oder kautschukartigen Polymeren hervorragend zur Herstellung flexibler bis weicher alterungsbestandiger Formkörper, insbesondere Flachengebilden, eignet. Das Produkt läßt sich problemlos verarbeiten und ergibt Formkörper, wie z.B. Folien, mit glatter Oberfläche und guten mechanischen Eigenschaften, die z.B. anschließend auch tiefgezogen werden können.

Gegenstand der Erfindung ist daher die Verwendung von Vinylchlorid-Acrylsäureester-Pfropfcopolymerisaten, die durch Aufpfropfen von 45 bis 65 Gew% Vinylchlorid auf 35 bis 55 Gew% teilvernetztes Polybutylacrylat erhalten worden sind, wobei sich die Angaben in Gew% jeweils auf das Gesamtgewicht des Pfropfcopolymeren beziehen, und die im Zugversuch nach DIN 53455 bei 23°C eine Reißfestigkeit von mindestens 15 N/mm und eine Reißdehnung von mindestens 200% aufweisen, ggf. im Gemisch mit anderen Kunststoffen und ggf. unter Zusatz von Füllstoffen, Verarbeitungshilfsstoffen und weiteren üblichen Zusatzmitteln zur Herstellung von flexiblen bis weichen, ggf. elastischen Formkörpern, insbesondere Flächengebilden.

Als andere Kunststoffe, die in Kombination mit dem obengenannten Pfropfcopolymeren erfindungsgemäß verwendet werden können, eignen sich z.B. Polymere, die eine Erhöhung der Warmeformbeständigkeit bewirken, z.B. Acrylnitril-Butadien-Styrol-Copolymer (ABS), Styrol-Acrylnitril-Copolymer (SAN), α-Methylstyrol-Acrylnitril-Copolymer (MSAN), Acrylnitril-Styrol-Acrylat-Copolymer (ASA), Styrol-Maleinanhydrid-Copolymer (PSMA), Polyvinylidenfluorid (PVDF), Methylmethacrylat-Butadien-Styrol-Copolymer (MBS), Polymethylmethacrylat (PMMA) und Polycarbonat (PC), solche, die die Shore-Härte herabsetzen, z.B. Ethylen-Vinylacetat-Co- und -Terpolymere (EVAC, VAE), solche, die der Mischung gummielastische Eigenschaften verleihen, z.B. thermoplastisches Polyurethan (TPU), thermoplastisches Polyesterelastomer (z.B. als Hytrel® im Handel), Polyetherblockamid (z.B. als Pebax® im Handel), Nitrilkautschuk (NBR) und Ethylen-Propylen-Dien-Kautschuk (EPDM), und chloriertes Polyethylen (CPE). Bei der Herstellung gummielastischer Formkörper wird TPU besonders bevorzugt mitverwendet.

Das erfindungsgemaß verwendete Pfropfcopolymere kann nach den dem Fachmann geläufigen Verfahren hergestellt werden, die hier daher keiner weiteren Erläuterung bedürfen. Diese Verfahren können als Lösungs-, als Suspensions- oder vorzugsweise als Emulsionspolymerisation durchgeführt werden, letztere vorzugsweise im wäßrigen Medium.

Die Pfropfcopolymere lassen sich in folgender Weise charakterisieren: 45 bis 65 Gew.-%, insbesondere 55 bis 65 Gew.-%. VC-Einheiten, aufgepfropft auf 35 bis 55 Gew.-%, insbesondere 35 bis 45 Gew.-%, teilvernetztes Polybutylacrylat; Shore A 80 bis 96, Reißfestigkeit mindestens 15 N/mm (im Zugversuch nach DIN 53455 bei 23°C), Reißdehnung mindestens 200% (im Zugversuch nach DIN 53455 bei 23°C), zwei Dämpfungsmaxima bei - 60 bis - 15 °C und + 60 bis + 85 °C, Abfall des Schubmoduls im Bereich von 0 bis 70 °C von etwa 170 N/mm auf etwa 60 N/mm und Verarbeitbarkeit an heißen Metalloberflächen ohne Kleben bei ca. 170 bis 200 °C.

Aus dem Pfropfcopolymeren lassen sich selbst in reiner Form flexible, alterungsbeständige Formkörper, vorzugsweise Flächengebilde, insbesondere Folien, in problemloser Weise herstellen. Die so erhaltenen Formkörper zeichnen sich durch glatte Oberflächen und gute mechanische Eigenschaften aus. Dies ist insbesondere deshalb überraschend, da mit anderen Schlagzähmodifiern auf Acrylatbasis, die für die schlagzähe Ausrüstung von PVC für den Außeneinsatz Verwendung finden, zwar unter bestimmten Bedingungen ebenfalls Flächengebilde hergestellt werden können, diese jedoch völlig unzureichende Eigenschaften, insbesondere hinsichtlich ihrer Festigkeit, aufweisen.

Weiterhin weisen z.B. aus dem Pfropfcopolymer erfindungsgemaß hergestellte Folien eine bemerkenswerte Transparenz auf, obwohl z.B. ein Zusatz des selben Pfropfcopolymers in Mengen von etwa 10 Gew.-% zu VC-Homopolymer trübe bis opake Produkte ergibt.

Das Pfropfcopolymerisat weist, z.B. gemäß einer bevorzugten Ausführungsform mit in der PVC-Technologie üblichen Stabilisatoren, bereits für viele Anwendungsgebiete eine ideales Eigenschaftsbild auf. So zeichnen sich die Produkte durch gute Flexibilität aus, ohne daß eine Weichmacherwanderung auftreten kann, sie besitzen ausgezeichnete Kälteeigenschaften, sind alterungs- und witterungsstabil, sehr gut ölbeständig, und die Oberflächen sind glatt und homogen. Außerdem läßt sich das Pfropfcopolymere problemlos verarbeiten zu Formkörpern, insbesondere Flächengebilden, die gut verklebbar, gut bedruckbar, hochfrequenzverschweißbar und gut tiefziehfähig sind und sich durch Zugfestigkeit, gute Reißfestigkeit, gute Reißdehnung und guten Weiterreißwiderstand auszeichnen.

Vielfach werden für bestimmte Anwendungen hinsichtlich bestimmter Eigenschaften besondere Anforderungen gestellt. Es stellte sich nun heraus, daß die Anpassung an solche Erfordernisse problemlos durch Verschneiden mit zahlreichen anderen Kunststoffen möglich ist. Solche Legierungen sind aufgrund der hervorragenden Plastiziercharakteristik und der chemischen Zusammensetzung des Pfropfcopolymeren sogar ohne Spezialmaschinen möglich. So lassen sich aus dem Pfropfcopolymeren in Abmischung mit Granulaten z.B. auf normalen PVC-Einschneckenextrudern oder Walzwerken homogene Folien erzielen. Demgegenüber ist die Homogenisierung von PVC mit einigen der genannten Kunststoffe vielfach gar nicht oder nur auf Spezialmaschinen möglich.

Aufgrund der guten Legierungsmöglichkeiten lassen sich somit ggf. durch Zugabe aucn mehrerer der genannten anderen Kunststoffe elastische bis flexible oder weiche Formkörper herstellen, bei denen auch verschiedene Eigenschaften kombiniert auftreten können, z.B. erhöhte Warmestandfestigkeit und Weichheit oder Weichheit mit Gummielastizität.

Zusätzlich zu den ggf. mitverwendeten anderen Kunststoffen, die vorstehend genannt sind, ist es auch möglich, in das Pfropfcopolymere weitere übliche Zusätze einzuarbeiten bzw. ihm zuzusetzen. Als Beispiele hierfür seien genannt: Verarbeitungshilfsmittel und Stabilisatoren, die meist in Mengen bis 5 Gew.-Teile je 100 Gew.-Teile Pfropfcopolymer und ggf. Kunststoffzusatz eingesetzt werden. Auch Füllstoffe können in den allgemein üblichen Mengen, die stark vom Einsatzzweck der hergestellten Formkörper abhängen, in die erfindungsgemaß verwendete Formmasse eingearbeitet werden. Als weitere Zusatzmittel kommen beispielsweise flamm- und rauchhindernde Zusätze in Frage.

Die folgenden Beispiele dienen der weiteren Erläuterung der Erfindung. Mengenangaben beziehen sich, soweit nichts anderes angegeben wurde, auf das Gewicht.

Folgende Polymeren und Zusatzmittel wurden eingesetzt (die Handelsnamen sind vermutlich eingetragene Warenzeichen):
- VC/PAE-Pfropfpolymer I =: Pfropfcopolymer aus 60 Gew.-% Vinylchlorid, auf 40 Gew.-% teilvernetztes Polybutylacrylat gepfropft
- VC/PAE-Pfropfpolymer II =: dto. mit 50 Gew.-% VC- und 50 Gew.-% Acrylat-Gehalt
- VC/PAE-Pfropfpolymer III =: dto. mit 45 Gew.-% VC- und 55 Gew.-% Acrylat-Gehalt
- VAE 651 (Wacker-Chemie) =: Ethylen-Vinylacetat-Copolymer mit 65 Gew.-% VAC- und 35 Gew.-% E-Einheiten
- PMMA (Plexiglas H8) =: Polymethylmethacrylat, Fa. Röhm
- Elastollan CVP 60AW =: thermoplastisches Polyurethan (Fa. Elastogran), Shore A60
- Elvaloy 742 P =: E/VAC/CO-Terpolyrner, Fa. Dupont
- Irganox 1076 =: Antioxidans Fa. Ciba-Geigy
- Irgastab 17 MOK =: Schwefel-Zinn-Stabilisator Fa. Ciba-Geigy
- Irgastab T 22 M =: Schwefel-Zinn-Stabilisator Fa. Ciba-Geigy
- Irgawax 371 =: Gleitmittel Fa. Ciba-Geigy
- Metablen W 300 =: Schlagzähmodifizierharz auf Acrylbasis Fa. Mitsui
- Paraloid KM 323 B =: Schlagzähmodifizierharz auf Acrylbasis, Fa. Rahm & Haas
- Pebax 2533 =: Polyether-Blockamid, Fa. Atochem
- Sandufor VSU =: UV-Absorber, Fa. Sandoz
- Solef 1008 =: Polyvinylidenfluorid, Fa. Solvay
- Vinuran KR 3811 =: MSAN, Fa. BASF
- Wachs E =: Gleitmittel, Montanesterwachs, Fa. Hoechst
- Dylarc 700 =: PSMA, Fa. Arco Chemical
- CPE 3614A =: chloriertes Polyethylen, Fa. Dow Chemical, Cl-Gehalt 36 %

Bei den angegebenen Durchstoßversuchen sind die Durchstoßarbeit (Nm) und die Schädigungskraft (N) auf 1 mm Foliendicke normiert als Nm/mm bzw. N/mm angegeben worden.

### Beispiel 1

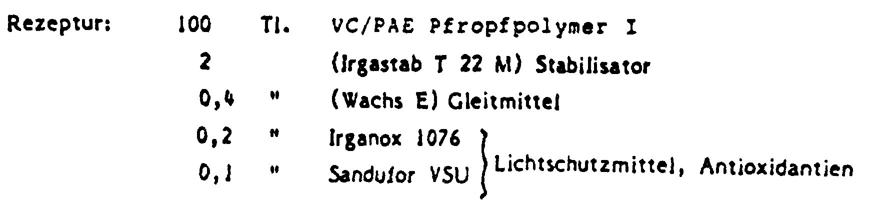

Verarbeitungsbedingungen: Vorplastifizierung am Mischwalzwerk: 165 °C/5'
am Versuchskalander: 195 °C/195 °C
Folienstärke: 0,4 mm
Prüfwerte:

| Prüfmethode | | DIN | Dimension | Prüfwerte |
|---|---|---|---|---|
| Durchstoßversuch | | 53 373 | | |
| bei 23 °C | Schädigungskraft | | N/mm | 2 012,2 |
| | Verformung bei Bruch | | mm | 22,3 |
| bei 0 °C | Schädigungskraft | | N/mm | 1 370,7 |
| | Verformung bei Bruch | | mm | 17,7 |
| bei -30 °C | Schädigungskraft | | N/mm | 1 784,3 |
| | Verformung bei Bruch | | mm | 15,3 |
| Härte | | 53 505 | Shore A | 95 |
| | | | Shore D | 51 |
| Vicat-Erweichungspunkt | | 53 460 | °C | 77 |
| Verfahren A | | | | |
| Zugversuch | | 53 455 | | |
| Reißfestigkeit | bei 23 °C | | N/mm | 28,80 |
| Reißdehnung | bei 23 °C | | % | 233 |

### Beispiel 2 (Vergleich)

| | | |
|---|---|---|
| Rezeptur: | 100 Tl. | Paraloid KM 323 B |
| | 0,5 Tl. | Irgastab T 22 M |
| | 0,3 Tl. | Irgawax 371 |

Verarbeitungsbedingungen: Vorplastifizierung am Mischwalzwerk: 165 °C/5'
am Versuchskalander: 195 °C/195 °C
Folienstärke: 0,4 mm
Prüfwerte:

| Prüfmethode | | DIN | Dimension | Prüfwerte |
|---|---|---|---|---|
| Härte | | 53 505 | Shore D | 40 |
| Vicat-Erweichungspunkt | | 53 460 | °C | 74,5 |
| Verfahren A | | | | |
| Zugversuch | | 53 455 | | |
| Reißfestigkeit | bei 23 °C | | N/mm | 9,04 |
| Reißdehnung | bei 23 °C | | % | 138 |

Bemerkung: Viele kleine Stippen in der Folie,
starker Geruch beim Kalandrieren.

### Beispiel 3 (Vergleich)

| | | |
|---|---|---|
| Rezeptur: | 100 Tl. | Metablen W 300 |
| | 0,5 Tl. | Irgastab T 22 M |
| | 0,3 Tl. | Irgawax 371 |

Verarbeitungsbedingungen: Vorplastifizierung am Mischwalzwerk: 165 °C/5'
am Versuchskalander: 195 °C/195 °C
Folienstärke: 0,4 mm
Prüfwerte:

| Prüfmethode | | DIN | Dimension | Prüfwerte |
|---|---|---|---|---|
| Härte | | 53 505 | Shore D | 43 |
| Vicat-Erweichungspunkt | | 53 460 | °C | 77 |
| Verfahren A | | | | |
| Zugversuch | | 53 455 | | |
| Reißfestigkeit | bei 23 °C | | N/mm | 11,74 |
| Reißdehnung | bei 23 °C | | % | 45 |

Bemerkung: Schwer abwischbarer Belag an der Folie.

### Beispiel 4

| | | |
|---|---|---|
| Rezeptur: | 100 Tl. | VC/PAE-Pfropfpolymer II |
| | 1,3 Tl. | Irgastab 17 MOK |

Verarbeitungsbedingungen: Vorplastifizierung am Mischwalzwerk: 165 °C/5'
am Versuchskalander: 195 °C/195 °C
Folienstärke: 0,2 mm
Prüfwerte:

| Prüfmethode | | DIN | Dimension | Prüfwerte |
|---|---|---|---|---|
| Durchstoßversuch | | 53 373 | | |
| bei 23 °C Durchstoßarbeit | | | N/mm | 20,1 |
| 0 °C | | | | 14,6 |
| -15 °C | | | | 14,3 |
| -30 °C | | | | 12 |
| bei 23 °C Schädigungskraft | | | N/mm | 1244,9 |
| 0 °C | | | | 1166,8 |
| -15 °C | | | | 1525,2 |
| -30 °C | | | | 1599,5 |
| Kältebruchtemperatur | | 53 372 | °C | <-60 |
| Härte | | 53 505 | Shore A | 88 |
| | | | Shore D | 36 |
| Zugversuch | | 53 455 | | |
| Reißfestigkeit | bei 23 °C | | N/mm | 24,17 |
| Reißdehnung | bei 23 °C | | % | 270 |
| Weiterreißwiderstand (Winkelprobe nach Graves) | | 53 515 | N/mm | 27 |

### Beispiel 5

| | | |
|---|---|---|
| Rezeptur: | 100 Tl. | VC/PAE-Pfropfpolymer III |
| | 1,3 Tl. | Irgastab 17 MOK |

Verarbeitungsbedingungen: Vorplastifizierung am Mischwalzwerk: 165 °C/5'
am Versuchskalander: 195 °C/195 °C
Folienstärke: 0,2 mm
Prüfwerte:

| Prüfmethode | | DIN | Dimension | Prüfwerte |
|---|---|---|---|---|
| Durchstoßversuch | | 53 373 | | |
| bei 23 °C Durchstoßarbeit | | | Nm/mm | 17,2 |
| 0 °C | | | | 13,1 |
| -15 °C | | | | 13,4 |
| -30 °C | | | | 11,9 |
| bei 23 °C Schädigungskraft | | | N/mm | 1052,8 |
| 0 °C | | | | 1048,2 |
| -15 °C | | | | 1377,3 |
| -30 °C | | | | 1525 |
| Kältebruchtemperatur | | 53 372 | °C | <-60 |
| Härte | | 53 505 | Shore A | 81 |
| | | | Shore D | 27 |
| Zugversuch | | 53 455 | | |
| Reißfestigkeit | bei 23 °C | | N/mm | 17,35 |
| Reißdehnung | bei 23 °C | | % | 242 |
| Weiterreißwiderstand (Winkelprobe nach Graves) | | 53 515 | N/mm | 17,9 |

### Beispiel 6

| | | |
|---|---|---|
| Rezeptur: | 80 Tl. | VC/PAE-Pfropfpolymer I |
| | 20 Tl. | Vinuran KR 3811 |
| | 2 Tl. | Irgastab T 22 M |
| | 0,4 Tl. | Wachs E |
| | 0,2 Tl. | Irganox 1076 |
| | 0,1 Tl. | Sandufor VSU |

Verarbeitungsbedingungen: Vorplastifizierung am Mischwalzwerk: 165 °C/5'
am Versuchskalander: 195 °C/195 °C
Folienstärke: 0,4 mm
Prüfwerte:

| Prüfmethode | | DIN | Dimension | Prüfwerte |
|---|---|---|---|---|
| Härte | | 53 505 | Shore D | 70 |
| Vicat-Erweichungspunkt | | 53 460 | °C | 92 |
| Verfahren A | | | | |
| Zugversuch | | 53 455 | | |
| Reißfestigkeit | bei 0 °C | | N/mm | 39,79 |
| | 23 °C | | | 32,38 |
| | 80 °C | | | 12,9 |
| Reißdehnung | bei 0 °C | | % | 138 |
| | 23 °C | | | 182 |
| | 80 °C | | | 265 |
| | 100 °C | | | 281 |
| | 140 °C | | | 188 |

### Beispiel 7

| | | |
|---|---|---|
| Rezeptur: | 70 Tl. | VC/PAE-Pfropfpolymer I |
| | 30 Tl. | Vinuran KR 3811 |
| | 2 Tl. | Irgastab T 22 M |
| | 0,4 Tl. | Wachs E |
| | 0,2 Tl. | Irganox 1076 |
| | 0,1 Tl. | Sandufor VSU |

Verarbeitungsbedingungen: Vorplastifizierung am Mischwalzwerk: 165 °C/5'
am Versuchskalander: 195 °C/195 °C
Folienstärke: 0,4 mm
Prüfwerte:

| Prüfmethode | | DIN | Dimension | Prüfwerte |
|---|---|---|---|---|
| Härte | | 53 505 | Shore D | 70 |
| Vicat-Erweichungspunkt | | 53 460 | °C | 100 |
| Verfahren A | | | | |
| Zugversuch | | 53 455 | | |
| Reißfestigkeit | bei 0 °C | | N/mm | 41,35 |
| | 23 °C | | | 33,51 |
| | 80 °C | | | 14,4 |
| Reißdehnung | bei 0 °C | | % | 122 |
| | 23 °C | | | 174 |
| | 80 °C | | | 229 |
| | 100 °C | | | 239 |
| | 140 °C | | | 266 |

### Beispiel 8

| | | |
|---|---|---|
| Rezeptur: | 77 Tl. | VC/PAE-Pfropfpolymer I |
| | 23 Tl. | Elvaloy 742 P |
| | 1,3 Tl. | Irgastab 17 MOK |
| | 1 Tl. | Wachs E |

Verarbeitungsbedingungen: Vorplastifizierung am Mischwalzwerk: 165 °C/5'
am Versuchskalander: 195 °C/195 °C
Folienstärke: 0,2 mm
Prüfwerte:

| Prüfmethode | | DIN | Dimension | Prüfwerte |
|---|---|---|---|---|
| Härte | | 53 505 | Shore A | 80 |
| | | | Shore D | 28 |
| Zugversuch | | 53 455 | | |
| Reißfestigkeit | bei 23 °C | | N/mm | 17,5 |
| | 80 °C | | | 1,3 |
| Reißdehnung | bei 23 °C | | % | 250 |
| | 80 °C | | | 130 |
| Weiterreißwiderstand (Winkelprobe nach Graves) | | 53 515 | N/mm | 28,5 |
| Durchstoßversuch | | 53 373 | | |
| Durchstoßarbeit | bei 0 °C | | N/mm | 11,3 |
| | -15 °C | | | 12,1 |
| | -30 °C | | | 13,8 |
| Schädigungskraft | bei 0 °C | | N/mm | 1220,8 |
| | -15 °C | | | 1482,9 |
| | -30 °C | | | 1692,6 |
| Kältebruchtemperatur | | 53 372 | °C | <-60 |

### Beispiel 9

| | | |
|---|---|---|
| Rezeptur: | 100 Tl. | VC/PAE-Pfropfpolymer I |
| | 30 Tl. | VAE 651 |
| | 1,3 Tl. | Irgastab 17 MOK |
| | 1 Tl. | Wachs E |

Verarbeitungsbedingungen: Vorplastifizierung am Mischwalzwerk: 165 °C/5'
am Versuchskalander: 195 °C/195 °C
Folienstärke: 0,2 mm
Prüfwerte:

| Prüfmethode | | DIN | Dimension | Prüfwerte |
|---|---|---|---|---|
| Härte | | 53 505 | Shore D | 38 |
| Zugversuch | | 53 455 | | |
| Reißfestigkeit | bei 23 °C | | N/mm | 26,1 |
| | 80 °C | | | 4,1 |
| Reißdehnung | bei 23 °C | | | 285 |
| | 80 °C | | | 372 |
| Weiterreißwiderstand (Winkelprobe nach Graves) | | 53 515 | N/mm | 36,9 |
| Durchstoßversuch | | 53 373 | | |
| Durchstoßarbeit | bei 0 °C | | Nm/mm | 11,7 |
| | -15 °C | | | 12,7 |
| | -30 °C | | | 5,6 |
| Schädigungskraft | bei 0 °C | | N /mm | 1342,1 |
| | -15 °C | | | 1645,9 |
| | -30 °C | | | 1455,5 |
| Kältebruchtemperatur | | 53 372 | °C | <-60 |

### Beispiel 10

| | | |
|---|---|---|
| Rezeptur: | 50 Tl. | Elastollan CVP 60 AW (TPU) |
| | 50 Tl. | VC/PAE-Pfropfpolymer I |
| | 1,3 Tl. | Irgastab 17 MOK |
| | 1 Tl. | Wachs E |

Verarbeitungsbedingungen: Mischwalzwerk 145 °C/5'
Versuchskalander 155 °C/150 °C
Folienstärke: 0,2 mm
Prüfwerte:

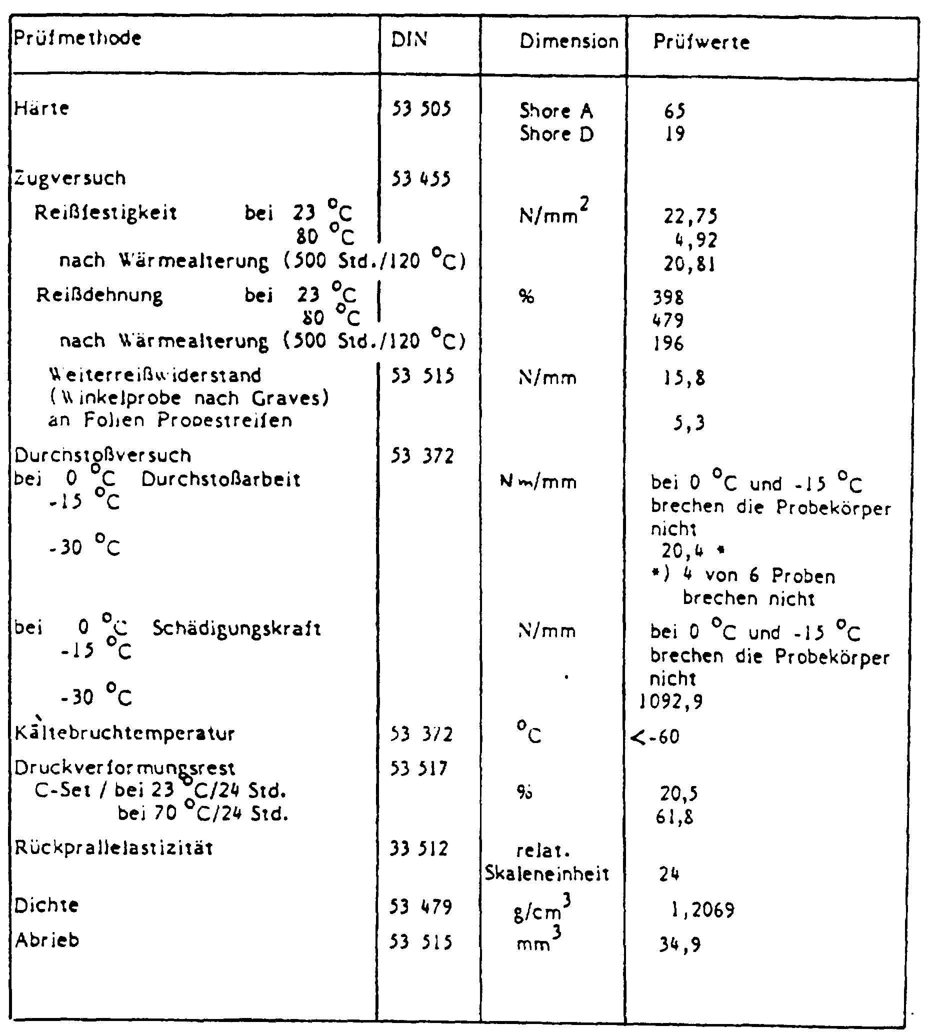

### Beispiel 11

| | | |
|---|---|---|
| Rezeptur: | 70 Tl. | VC/PAE-Pfropfpolymer I |
| | 20 Tl. | Vinuran KR 3811 |
| | 10 Tl. | Pebax 2533 |
| | 0,5 Tl. | Irgastab T 22 M |
| | 0,3 Tl. | Irgawax 371 |

Verarbeitungsbedingungen: Vorplastifizierung am Mischwalzwerk: 165 °C/5'
am Versuchskalander: 195 °C/195 °C
Folienstärke: 0,4 mm
Prüfwerte:

| Prüfmethode | | DIN | Dimension | Prüfwerte |
|---|---|---|---|---|
| Härte | | 53 505 | Shore D | 56 |
| Vicat-Erweichungspunkt | | 53 460 | °C | 90,5 |
| Verfahren A | | | | |
| Zugversuch | | 53 455 | | |
| Reißfestigkeit | bei 23 °C | | N/mm | 25,87 |
| nach Wärmealterung (500 Std./120 °C) | | | | 24,86 |
| Reißdehnung | bei 23 °C | | % | 171 |
| | 100 °C | | | 202 |
| | 140 °C | | | 133 |
| | 180 °C | | | 233 |
| nach Wärmealterung (500 Std./120 °C) | | | | 143 |

### Beispiel 12

| | | |
|---|---|---|
| Rezeptur: | 55 Tl. | VC/PAE-Pfropfpolymer I |
| | 30 Tl. | Solef 1008 |
| | 15 Tl. | Elvaloy 742 P |
| | 0,5 Tl. | Irgastab T 22 M |
| | 0,3 Tl. | Irgawax 371 |

Verarbeitungsbedingungen: Vorplastifizierung am Mischwalzwerk: 165 °C/5'
am Versuchskalander: 195 °C/195 °C
Folienstärke: 0.4 mm
Prüfwerte:

| Prüfmethode | | DIN | Dimension | Prüfwerte |
|---|---|---|---|---|
| Härte | | 53 505 | Shore D | 44 |
| Vicat-Erweichungspunkt | | 53 460 | °C | 67 |
| Verfahren A | | | | |
| Zugversuch | | 53 455 | | |
| Reißfestigkeit | bei 23 °C | | N/mm | 29,34 |
| nach Wärmealterung (500 Std./120 °C) | | | | 26,51 |
| Reißdehnung | bei 23 °C | | % | 354 |
| | 100 °C | | | 230 |
| | 140 °C | | | 193 |
| | 180 °C | | | 135 |
| nach Wärmealterung (500 Std./120 °C) | | | | 194 |

Bemerkung: matte Folienoberfläche

### Beispiel 13

| | | |
|---|---|---|
| Rezeptur: | 50 Tl. | VC/PAE-Pfropfpolymer I |
| | 25 Tl. | Dylarc 700 |
| | 14 Tl. | VAE 651 |
| | 11 Tl. | CPE 3614A |
| | 2,5 Tl. | Stabilisator |
| | 1,5 Tl. | Antioxidantien |

Verarbeitungsbedingungen: Vorplastifizierung am Mischwalzwerk: 165 °C/5'
am Versuchskalander: 195 °C/195 °C
Folienstärke: 0,4 mm
Prüfwerte:

| Prüfmethode | | DIN | Dimension | Prüfwerte |
|---|---|---|---|---|
| Härte | | 53 505 | Shore D | 47 |
| Vicat-Erweichungspunkt | | 53 460 | °C | 58 |
| Verfahren A | | | | |
| Zugversuch | | 53 455 | | |
| Reißfestigkeit | bei 23 °C | | N/mm | 24 |
| nach Wärmealterung (500 Std./120 °C) | | | | 25 |
| Reißdehnung | bei 23 °C | | % | 270 |
| nach Wärmealterung (500 Std./120 °C) | | | | 200 |

### Beispiel 14

| | | |
|---|---|---|
| Rezeptur: | 55 Tl. | VC/PAE-Pfropfpolymer I |
| | 30 Tl. | PMMA |
| | 15 Tl. | Elvaloy 742P |
| | 2,5 Tl. | Stabilisator |
| | 1,5 Tl. | Antioxidantien und Gleitmittel |

Verarbeitungsbedingungen: Vorplastifizierung am Mischwalzwerk: 165 °C/5'
am Versuchskalander: 195 °C/195 °C
Folienstärke: 0,4 mm
Prüfwerte:

| Prüfmethode | | DIN | Dimension | Prüfwerte |
|---|---|---|---|---|
| Härte | | 53 505 | Shore D | 53 |
| Vicat-Erweichungspunkt | | 53 460 | °C | 82,5 |
| Verfahren A | | | | |
| Zugversuch | | 53 455 | | |
| Reißfestigkeit | bei 23 °C | | N/mm | 24 |
| nach Wärmealterung (500 Std./120 °C) | | | | 34 |
| Reißdehnung | bei 23 °C | | % | 199 |
| nach Wärmealterung (500 Std./120 °C) | | | | 142 |

### Beispiel 15

| | | |
|---|---|---|
| Rezeptur: | 20 Tl. | Elastollan CVP 60 AW |
| | 60 Tl. | VC/PAE-Pfropfpolymer I |
| | 20 Tl. | Elvaloy 742 P |
| | 1,3 Tl. | Irgastab 17 MOK |
| | 1 Tl. | Wachs E |

Verarbeitungsbedingungen: Mischwalzwerk 145 °C/5'
Versuchskalander 155 °C/150 °C
Folienstärke: 0,2 mm
Prüfwerte:

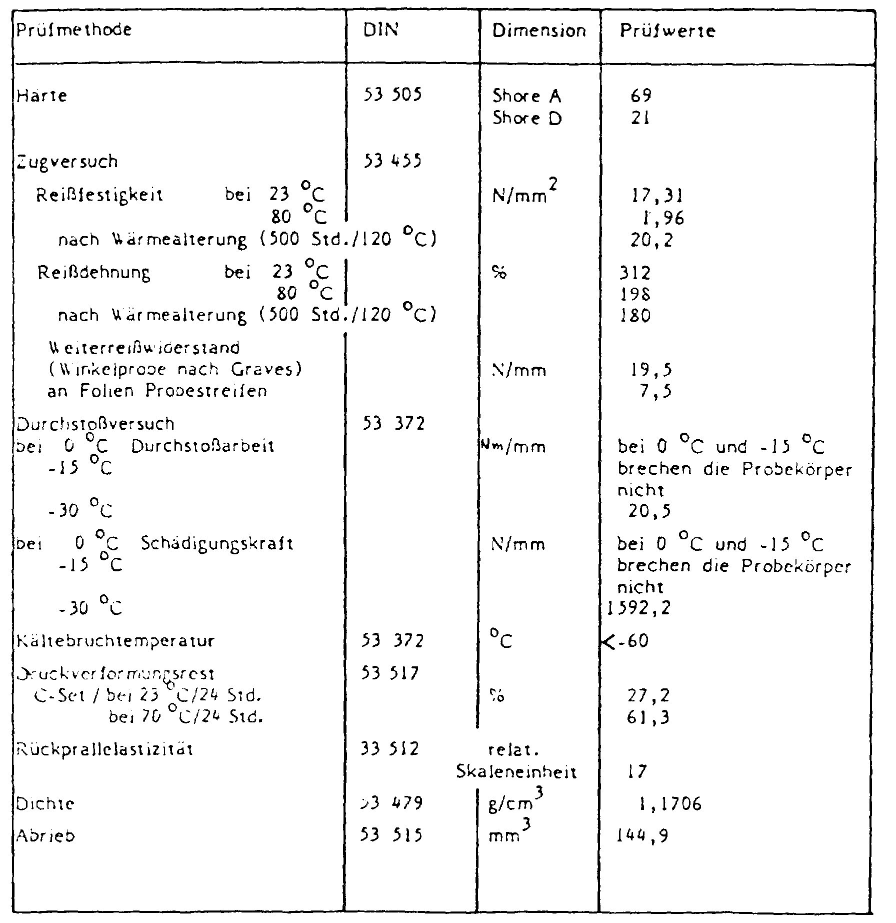

### Beispiel 16

| | | |
|---|---|---|
| Rezeptur: | 20 Tl. | Elastollan |
| | 60 Tl. | VC/PAE-Pfropfcopolymer I |
| | 20 Tl. | VAE 651 |
| | 1,3 Tl. | Irgastab 17 MOK |
| | 1 Tl. | Wachs E |

Verarbeitungsbedingungen: Mischwalzwerk 145 °C/5'
Versuchskalander 155 °C/150 °C
Folienstärke: 0,2 mm
Prüfwerte:

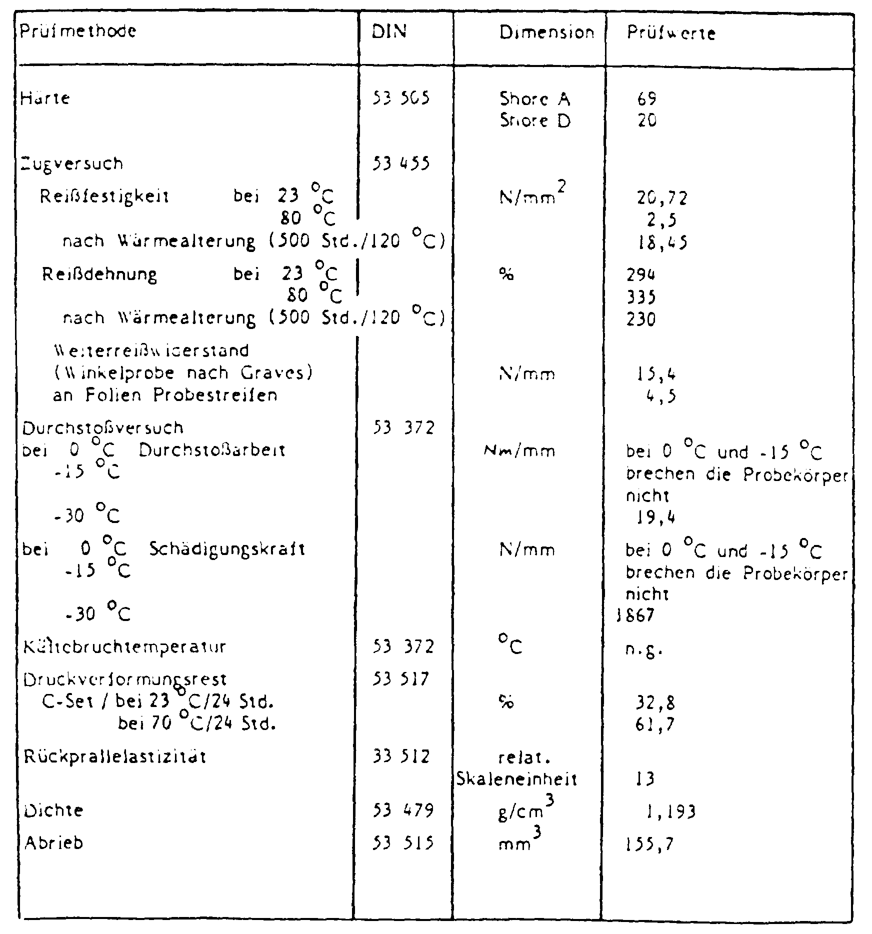

## Patentansprüche

1. Verwendung von Vinylchlorid-Acrylsäureester-Pfropfcopolymerisaten, die durch Aufpfropfen von 45 bis 65 Gew% Vinylchlorid auf 35 bis 55 Gew% teilvernetztes Polybutylacrylat erhalten worden sind, wobei sich die Angaben in Gew% jeweils auf das Gesamtgewicht des Pfropfcopolymeren beziehen, und die im Zugversuch nach DIN 53455 bei 23°C eine Reißfestigkeit von mindestens 15 N/mm und eine Reißdehnung von mindestens 200 % aufweisen, ggf. im Gemisch mit anderen Kunststoffen und ggf. unter Zusatz von Füllstoffen, Verarbeitungshilfsstoffen und weiteren üblichen Zusatzmitteln zur Herstellung von flexiblen bis weichen, ggf. elastischen Formkörpern.

## Claims

1. The use of vinyl chloride/acrylate graft copolymers which have been obtained by grafting 45 to 65% by weight of vinyl chloride onto 35 to 55% by weight of partially crosslinked polybutyl acrylate, the data in % by weight each being based on the total weight of the graft copolymer, and which, in the tensile test according to DIN 53455 at 23°C, have a tensile strength of at least 15 N/mm and an elongation at break of at least 200%, optionally as a mixture with other plastics and optionally with the addition of fillers, processing auxiliaries and further customary additives for the production of flexible to soft, optionally elastic, moulded articles.

## Revendications

1. Utilisation de copolymérisats greffés de chlorure de vinyle-ester acrylique, qui ont été obtenus par greffage de 45 à 65 % en poids de chlorure de vinyle sur de 35 à 55 % en poids d'un polyacrylate de butyle partiellement réticulé, les indications de % en poids se rapportant à chaque fois au poids total du copolymère greffé, et qui présentent dans l'essai de traction conformément à la norme DIN 53455 à 23°C une résistance à la rupture d'au moins 15 N/mm et un allongement à la rupture d'au moins 200 %, le cas échéant en mélange avec d'autres matières synthétiques et, le cas échéant, avec addition de charges, de substances d'assistance à la mise en oeuvre et d'additifs usuels supplémentaires, en vue de la fabrication de corps de forme flexibles à mous, le cas échéant élastiques.
